# EUROPÄISCHE PATENTANMELDUNG

(11) **EP 2 060 440 A2**
(43) Veröffentlichungstag der Anmeldung: **20.05.2009**
(21) Anmeldenummer: 08450025.5
(22) Anmeldetag: 28.02.2008
(51) Int. Cl.: B60P 7/12, B60P 7/08, B65D 71/04, B65D 81/05

(54) **Vorrichtung zur Befestigung mindestens eines Fördergutes an der Ladefläche eines Transportfahrzeuges**

(30) Priorität: 15.11.2007 EP 07450199
(71) Anmelder: Deutschmann, Otmar W., 4470 Enns (AT)
(72) Erfinder: Deutschmann, Otmar W., 4470 Enns (AT)
(74) Vertreter: Beer, Manfred

(57) **Zusammenfassung**

Vorrichtung zur Befestigung mindestens eines Fördergutes (3), wie einer Betonplatte, eines Fertigteilelementes, mindestens einer Trommel (31) eines eingerollten Metallbandes u.dgl., mittels Spannelementen, insbesondere Spannketten (4, 5), an der Ladefläche (61) eines Transportfahrzeuges (6). Dabei sind zwei Eckschutzwinkel (1) vorgesehen, welche an zwei außen befindliche Kanten des Fördergutes (3) zur Anlage bringbar sind, wobei sie mit jeweils einem ersten Schenkel (1a) an die obere Oberfläche und mit dem zweiten Schenkel (1b) an die dieser Oberfläche zugeordnete Seitenfläche des Fördergutes (3) anliegen, sind weiters die beiden Eckschutzwinkel (1) mittels eines ersten Spannelementes (4) miteinander verspannbar und ist an jeden der beiden Eckschutzwinkel (1) ein Befestigungsring (12) angelenkt, an welchem jeweils ein zweites Spannelement (5) befestigbar ist, durch welche die Eckschutzwinkel (1) gegenüber der Ladefläche (61) verspannbar sind.

## Beschreibung

Die gegenständliche Erfindung betrifft eine Vorrichtung zur Befestigung mindestens eines Fördergutes, wie einer Betonplatte, eines Fertigteilelementes, einer Trommel eines eingerollten Metallbandes u.dgl., mittels Spannelementen, insbesondere Spannketten, an der Ladefläche eines Transportfahrzeuges.

Beim Transport von Gütern besteht das gesetzliche Erfordernis, diese auf den Ladeflächen von Transportfahrzeugen starr zu befestigen. Hierfür sind einerseits erste Spannketten vorgesehen, durch welche die Fördergüter miteinander verbunden werden. Andererseits sind zweite Spannketten vorgesehen, durch welche die ersten Spannketten an den Ladeflächen verankert werden. Hierfür müssen die zweiten Spannketten an die ersten Spannketten angelenkt werden. Um die zweiten Spannketten an die ersten Spannketten anlenken zu können, müssen die ersten Spannketten mit relativ großen Kettengliedern ausgebildet sein. Derart ausgebildete Spannketten sind jedoch nicht zulässig. Vielmehr sind nur solche Spannketten zulässig, deren Kettenglieder eine so geringe Größe aufweisen, dass es nicht möglich ist, in diese die Haken der zweiten Spannketten einzusetzen.
Bekannte Spannketten sind zudem auch deshalb nachteilig, da durch diese die Kanten der Fördergüter beschädigt werden können.

Der gegenständlichen Erfindung liegt somit die Aufgabe zugrunde, eine Vorrichtung zur Befestigung eines Fördergutes an der Ladefläche eines Transportfahrzeuges zu schaffen, durch welche die den bekannten Vorrichtungen anhaftenden Nachteile vermieden werden. Diese Aufgabe wird erfindungsgemäß dadurch gelöst, dass zwei Eckschutzwinkel vorgesehen sind, welche an zwei außen befindliche Kanten des Fördergutes zur Anlage bringbar sind, wobei sie mit jeweils einem ersten Schenkel an die obere Oberfläche und mit dem zweiten Schenkel an die dieser Oberfläche zugeordnete Seitenfläche des Fördergutes anliegen, dass weiters die beiden Eckschutzwinkel mittels eines ersten Spannelementes miteinander verspannbar sind und dass an jeden der beiden Eckschutzwinkel ein Befestigungsring angelenkt ist, an welchem jeweils ein zweites Spannelement befestigbar ist, durch welche die Eckschutzwinkel gegenüber der Ladefläche verspannbar sind.

Vorzugsweise sind die beiden Eckschutzwinkel mit Nuten od.dgl. zur Aufnahme des ersten Spannelementes ausgebildet. Dabei können die Nuten od.dgl. durch jeweils zwei von den Eckschutzwinkeln abragende und voneinander im Abstand befindliche Leisten gebildet sein. Vorzugsweise sind die beiden Eckschutzwinkel im Eckbereich der beiden Schenkel mit einer Ausnehmung od.dgl. ausgebildet, welche vom zugeordneten Befestigungsring durchsetzt ist. Der Befestigungsring ist insbesondere oval ausgebildet.

Vorzugsweise sind weiters die Eckschutzwinkel an den freien Enden eines ihrer beiden Schenkel mit einer Öse ausgebildet, in welche ein Haken einsetzbar ist, welcher an den beiden Enden des Spannelementes vorgesehen ist, wobei die Ösen zweier einander zugeordneter Eckschutzwinkel zueinander gerichtet sind. Dabei können sich die beiden Endbereiche des Spannelementes überkreuzen. Zudem sind vorzugsweise die Spannelemente jeweils mittels eines Spannschlosses verspannbar.

Eine erfindungsgemäße Vorrichtung für ein Fördergut, welches durch mindestens eine stehende Trommel von eingerollten Metallbändern gebildet ist, ist vorzugsweise durch zwei erste Eckschutzwinkel gebildet, welche an die beiden oberen Kanten der mindestens einen Trommel zur Anlage bringbar sind und welchen zwei zweite Eckschutzwinkel zugeordnet sind, welche an die durch eine mittlere Ausnehmung der mindestens einen Trommel gebildeten inneren Kanten zur Anlage bringbar sind, wobei über diese vier Eckschutzwinkel das erste Spannelement, insbesondere eine Spannkette, legbar ist, durch welche die vier Eckschutzwinkel miteinander verspannbar sind. Dabei können auch die zweiten Eckschutzwinkel mit Nuten od.dgl. zur Aufnahme des ersten Spannelementes ausgebildet sein. Vorzugsweise sind weiters diejenigen beiden Eckschutzwinkel, welche an eine äußere Kante und die zugeordnete innere Kante der mindestens einer Trommel zur Anlage bringbar sind, mittels eines Zugelementes zu einer funktionellen Einheit verbunden.
Vorzugsweise ist dieses Zugelement in seiner Länge einstellbar ist. Zudem kann das Zugelement an in den Eckschutzwinkeln vorgesehenen Bolzen befestigt sein.

Eine erfindungsgemäße Vorrichtung ist nachstehend anhand eines in der Zeichnung dargestellten Ausführungsbeispiels näher erläutert. Es zeigen:
- FIG. 1: eine erfindungsgemäße Vorrichtung, in Seitenansicht;
- FIG.1a: die Vorrichtung gemäß FIG.1, in Stirnansicht;

- FIG.1b: die erfindungsgemäße Vorrichtung gemäß FIG.1, in gegenüber dieser vergrößertem Maßstab;
- FIG.2: zwei Bestandteile einer erfindungsgemäßen Vorrichtung, in Seitenansicht, in gegenüber FIG.1b vergrößertem Maßstab;
- FIG.3, FIG.3a, FIG.3b: den ersten Bestandteil der Vorrichtung gemäß FIG.2, in Seitenansicht, in Draufsicht und in Vorderansicht, und
- FIG.4, FIG.4a, FIG.4b: den zweiten Bestandteil der Vorrichtung gemäß FIG.2, in Seitenansicht, in Draufsicht und in Stirnansicht.

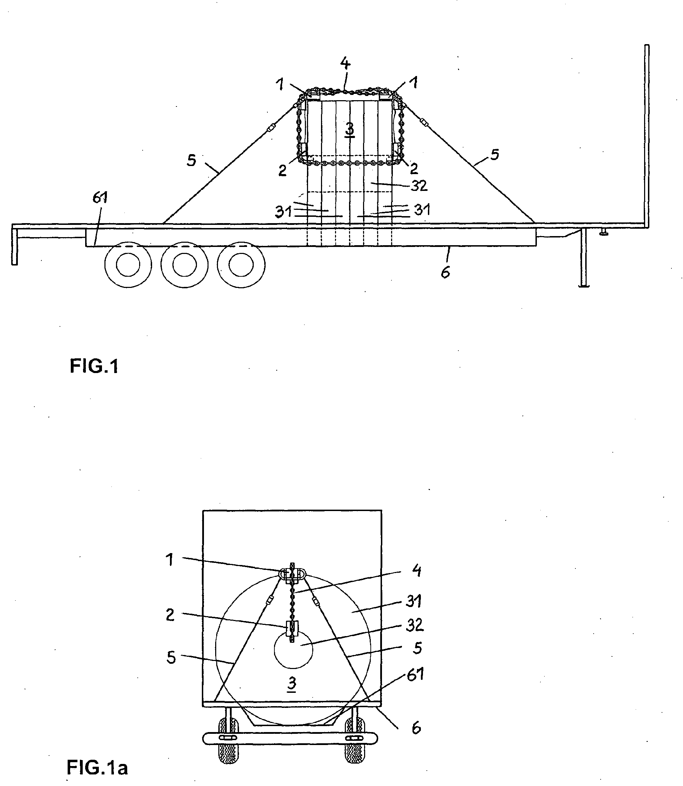

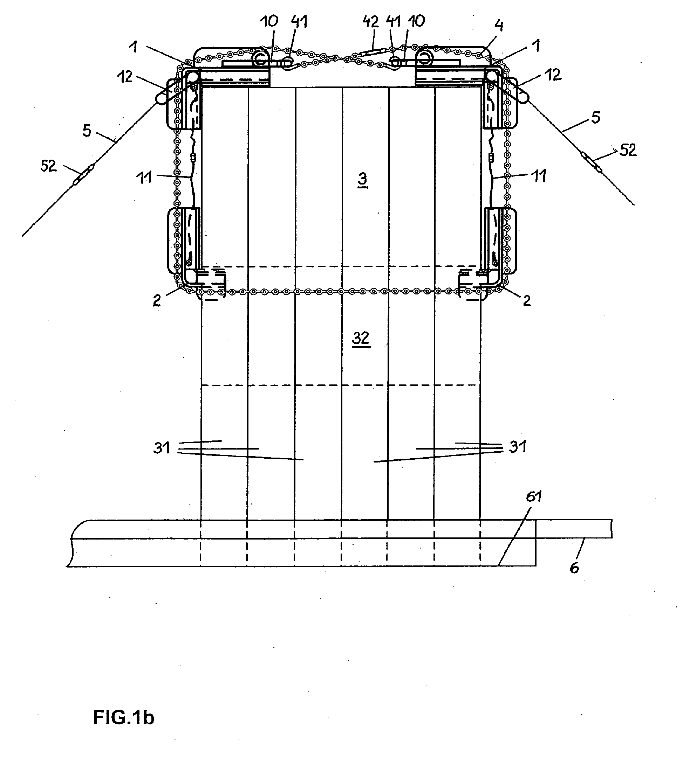

Wie dies in den FIG.1 und FIG.1a dargestellt ist, dient eine erfindungsgemäße Vorrichtung zur Befestigung eines Fördergutes an der Ladefläche eines Transportfahrzeuges. Die erfindungsgemäße Vorrichtung weist zwei erste Eckschutzwinkel 1 sowie bei diesem Ausführungsbeispiel zwei zweite Eckschutzwinkel 2 auf.

In diesem Ausführungsbeispiel ist das Fördergut 3 durch eine Mehrzahl von stehend aneinandergesetzten Trommeln 31 von Metallbändern gebildet, wobei diese Trommeln 31 in ihrem mittleren Bereich mit Ausnehmungen 32 ausgebildet sind. Derart weisen diese Trommeln 31 äußere und innere Kanten auf, an welche zwei erste Eckschutzwinkel 1 und zwei zweite Eckschutzwinkel 2 zur Anlage kommen, welche mittels einer ersten Spannkette 4 miteinander verspannt werden. Die mittels der Spannkette 4 miteinander verspannten Trommeln 31 sind mittels weiterer Spannketten 5 mit der Ladefläche 61 eines Transportfahrzeuges 6 verspannt, wobei diese Verspannung mit der Ladefläche 61 mittels vier Spannketten 5, welchen von den beiden oberen Eckschutzwinkeln 1 schräg nach unten verlaufen, erfolgt.

Wie dies insbesondere aus FIG.1b ersichtlich ist, sind die horizontal ausgerichteten Schenkel der beiden Eckschutzwinkel 1 mit horizontal abragenden und zueinander gerichteten Ösen 10 ausgebildet, in welche Haken 41, welche sich an den freien Enden der Spannkette 4 befinden, eingesetzt sind. Dabei ist der Haken 41 eines ersten freien Endes der Spannkette 4 an die Öse 10 des in FIG.1b linken Eckschutzwinkels 1 eingehakt und ist der Haken 41 des zweiten Endes der Spannkette 4 in die Öse 10 des rechten Eckschutzwinkels 1 eingehakt, wobei sich die beiden Endbereiche der Spannkette 4 überkreuzen. Die Verspannung der Spannkette 4 erfolgt mittels eines Spannschlosses 42.
Durch diesen Verlauf der Spannkette 4 erfolgt eine sehr wirkungsvolle Verspannung der Trommeln 31 miteinander.

In analoger Weise sind die Spannketten 5 mit Spannschlössern 52 ausgebildet. Zudem ist aus FIG.1b ersichtlich, dass die beiden Gruppen der Eckschutzwinkel 1 und 2 miteinander mittels Zugbändern 11 zu Gruppen verbunden sind, wodurch deren Befestigung an den Trommeln 31 erleichtert wird. Die Zugbänder 11 sind in ihrer Länge einstellbar.
Wie dies weiters aus FIG.1b ersichtlich ist, sind die Eckschutzwinkel 1 mit Befestigungsringen 12 ausgebildet, mittels welcher an die ersten Eckschutzwinkel 1 die Spannketten 5 angelenkt werden können. Die Befestigungsringe 12 sind in Ausnehmungen eingesetzt, welche in den Eckbereichen der ersten Eckschutzwinkel 1 vorgesehen sind. Weiters sind die Befestigungsringe 12 oval ausgebildet.

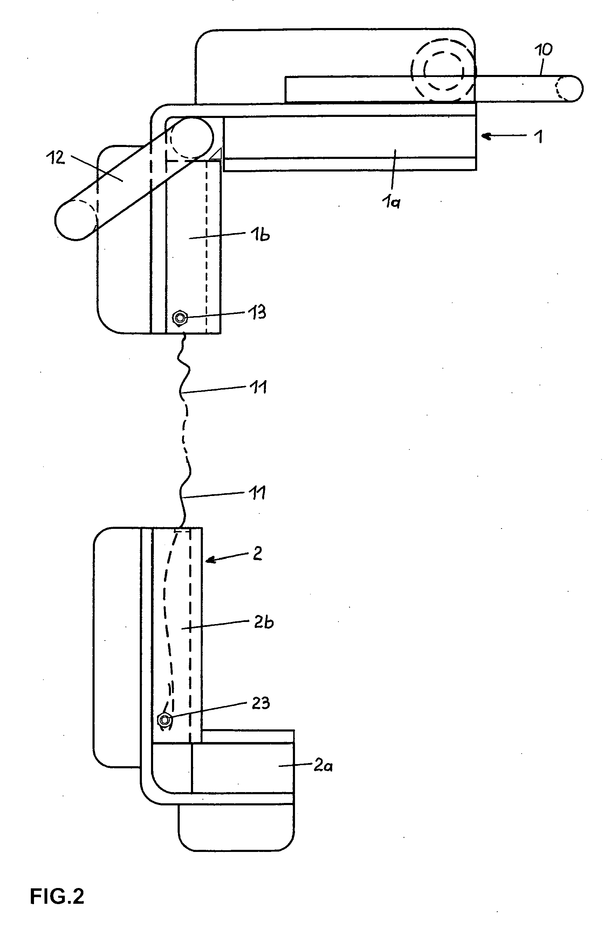

In FIG.2 sind zwei einander zugeordnete und mittels eines Zugbandes 11 zu einer Einheit verbundene Eckschutzwinkel 1 und 2 dargestellt. Das Zugband 11 ist an Bolzen 13 und 23 der beiden Eckschutzwinkel 1 und 2 befestigt. Der Eckschutzwinkel 1 ist mit einem ersten Schenkel 1a und mit einem vom ersten Schenkel 1a quer abragenden zweiten Schenkel 1b ausgebildet. Der Eckschutzwinkel 2 ist gleichfalls mit einem ersten Schenkel 2a und mit einem vom ersten Schenkel 2a quer abragenden zweiten Schenkel 2b ausgebildet. In Verwendung dieser beiden Eckschutzwinkel 1 und 2 zur Befestigung von stehend angeordneten Trommeln sind die beiden Schenkel 1b und 2b zueinander gerichtet. Der Schenkel 1a ist mit der Öse 10 ausgebildet und in den Eckschutzwinkel 1 ist der Ring 12 eingesetzt.

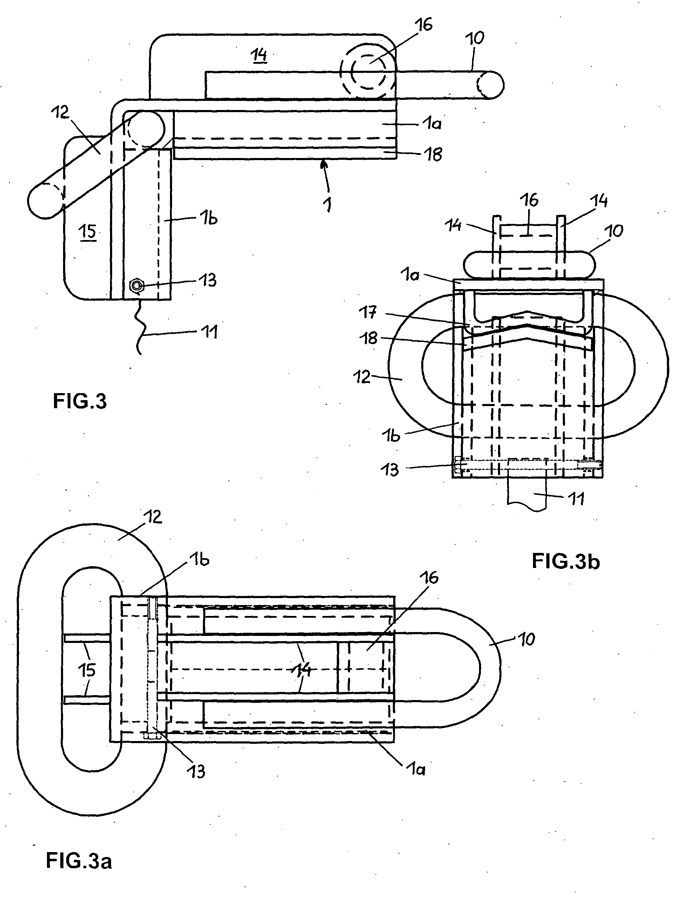

Wie dies aus den FIG.3, FIG.3a und FIG.3b ersichtlich ist, sind die ersten Eckschutzwinkel 1 an ihrem horizontalen Schenkel 1a mit zwei voneinander im Abstand befindlichen und nach oben abragenden Stegen 14 ausgebildet und sind sie an ihren vertikalen Schenkeln 1b mit zwei voneinander im Abstand befindlichen und quer abragenden Leisten 15 ausgebildet, durch welche Leisten 14 und 15 jeweils zwei Kanäle gebildet sind, in welchen die Spannkette 4 geführt wird. Weiters sind die beiden Leisten 14 miteinander durch einen rohrförmigen Steg 16 verbunden, über welchen die Spannkette 4 geführt ist, wodurch diese im Abstand vom Fördergut 3 gehalten ist, sodass deren Spannwirkung vergrößert wird. Weiters ist die Innenfläche des horizontalen Schenkels 1a mit einer dachartigen Abschrägung 17 ausgebildet, mit welcher er an der gewölbten Außenfläche der Trommeln 31 unter Zwischenlage einer Platte 18 aus einem elastischen Material zur Anlage kommt.

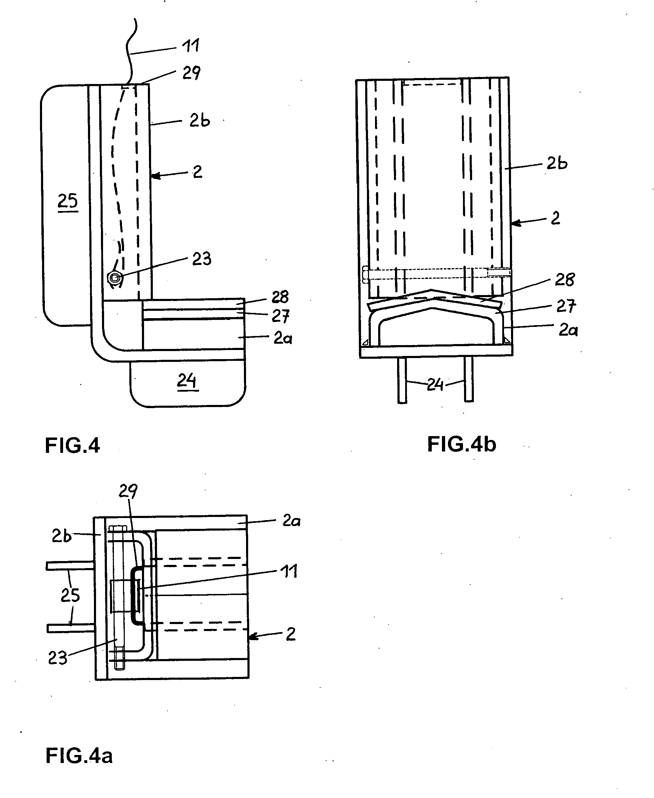

Wie dies weiters aus den FIG.4, FIG.4a und FIG.4b ersichtlich ist, sind auch die beiden Schenkel 2a und 2b des zweiten Eckschutzwinkels 2 mit voneinander im Abstand befindlichen, quer abragenden Leisten 24 und 25 ausgebildet, durch welche Kanäle zur Führung der ersten Spannkette 4 gebildet sind. Zudem ist bei diesem Eckschutzwinkel 2 der horizontale Schenkel 2a an seiner Oberseite mit einer dachartigen Abschrägung 27 ausgebildet, mit welcher er unter Zwischenlage einer elastischen Platte 28 an die Innenfläche der in den Trommeln 31 befindlichen Ausnehmungen 32 zur Anlage kommt. Zudem ist der Schenkel 2b der zweiten Eckschutzwinkel 2 mit einem Bügel 29 ausgebildet, durch welchen das Zugband 11 hindurchgeführt ist.

Die beiden Platten 18 und 28 dienen einerseits dazu, Beschädigungen des Fördergutes zu vermeiden und andererseits dazu, Rutschsicherungen zu bilden.

Anstelle von Spannketten können auch Spanngurten oder Spannseile vorgesehen sein.

## Patentansprüche

1. Vorrichtung zur Befestigung mindestens eines Fördergutes (3), wie einer Betonplatte, eines Fertigteilelementes, mindestens einer Trommel (31) eines eingerollten Metallbandes u.dgl., mittels Spannelementen, insbesondere Spannketten (4, 5), an der Ladefläche (61) eines Transportfahrzeuges (6), **dadurch gekennzeichnet, dass** zwei Eckschutzwinkel (1) vorgesehen sind, welche an zwei außen befindliche Kanten des Fördergutes (3) zur Anlage bringbar sind, wobei sie mit jeweils einem ersten Schenkel (1a) an die obere Oberfläche und mit dem zweiten Schenkel (1b) an die dieser Oberfläche zugeordnete Seitenfläche des Fördergutes (3) anliegen, dass weiters die beiden Eckschutzwinkel (1) mittels eines ersten Spannelementes (4) miteinander verspannbar sind und dass an jeden der beiden Eckschutzwinkel (1) ein Befestigungsring (12) angelenkt ist, an welchem jeweils ein zweites Spannelement (5) befestigbar ist, durch welche die Eckschutzwinkel (1) gegenüber der Ladefläche (61) verspannbar sind.

2. Vorrichtung nach Patentanspruch 1, **dadurch gekennzeichnet, dass** die beiden Eckschutzwinkel (1) mit Nuten od.dgl. zur Aufnahme des ersten Spannelementes (4) ausgebildet sind.

3. Vorrichtung nach Patentanspruch 1, **dadurch gekennzeichnet, dass** die Nuten od.dgl. durch jeweils zwei von den Eckschutzwinkeln (1) abragende und voneinander im Abstand befindliche Leisten (14, 15) od.dgl. gebildet sind.

4. Vorrichtung nach einem der Patentansprüche 1 bis 3, **dadurch gekennzeichnet, dass** die beiden Eckschutzwinkel (1) im Eckbereich der beiden Schenkel (1a, 1b) mit einer Ausnehmung od.dgl. ausgebildet sind, welche vom zugeordneten Befestigungsring (12) durchsetzt ist.

5. Vorrichtung nach Patentanspruch 4, **dadurch gekennzeichnet, dass** der Befestigungsring (12) angenähert oval ausgebildet ist.

6. Vorrichtung nach einem der Patentansprüche 1 bis 5, **dadurch gekennzeichnet, dass** die Eckschutzwinkel (1) an den freien Enden eines ihrer beiden Schenkel (1a) mit einer Öse (10) ausgebildet sind, in welche ein Haken (41) einsetzbar ist, welcher an den beiden Enden des Spannelementes (4) vorgesehen ist.

7. Vorrichtung nach Patentanspruch 6, **dadurch gekennzeichnet, dass** die Ösen (10) zweier einander zugeordneter Eckschutzwinkel (1) zueinander gerichtet sind.

8. Vorrichtung nach einem der Patentansprüche 6 und 7, **dadurch gekennzeichnet, dass** sich die beiden Endbereiche des Spannelementes (4) überkreuzen.

9. Vorrichtung nach einem der Patentansprüche 1 bis 8, **dadurch gekennzeichnet, dass** die Spannelemente (4, 5) jeweils mittels eines Spannschlosses (42, 52) verspannbar sind.

10. Vorrichtung nach einem der Patentansprüche 1 bis 9, **dadurch gekennzeichnet, dass** das Fördergut (3) durch mindestens eine stehende Trommel (31) von eingerollten Metallbändern gebildet ist, wobei zwei erste Eckschutzwinkel (1) an die beiden oberen Kanten der mindestens einen Trommel (31) zur Anlage bringbar sind und den beiden ersten Eckschutzwinkeln (1) zwei zweite Eckschutzwinkel (2) zugeordnet sind, welche an die durch eine mittlere Ausnehmung (32) der mindestens einen Trommel (31) gebildeten inneren Kanten zur Anlage bringbar sind, wobei über die vier Eckschutzwinkel (1, 2) das erste Spannelement, insbesondere eine Spannkette (4), legbar ist, durch welche die vier Eckschutzwinkel (1, 2) miteinander verspannbar sind.

11. Vorrichtung nach Patentanspruch 10, **dadurch gekennzeichnet, dass** auch die zweiten Eckschutzwinkel (2) mit Nuten od.dgl. zur Aufnahme des ersten Spannelementes (4) ausgebildet sind.

12. Vorrichtung nach einem der Patentansprüche 10 und 11, **dadurch gekennzeichnet, dass** diejenigen beiden Eckschutzwinkel (1, 2), welche an eine äußere Kante und die zugeordnete innere Kante der mindestens einer Trommel (31) zur Anlage bringbar sind, mittels eines Zugelementes (11) zu einer funktionellen Einheit verbunden sind.

13. Vorrichtung nach Patentanspruch 12, **dadurch gekennzeichnet, dass** das Zugelement (11) in seiner Länge einstellbar ist.

14. Vorrichtung nach einem der Patentansprüche 12 und 13, **dadurch gekennzeichnet, dass** das Zugelement (11) an in den Eckschutzwinkeln (1, 2) vorgesehenen Bolzen (13, 23) befestigt ist.
